# EUROPÄISCHE PATENTSCHRIFT

(11) **EP 1 475 424 B1**
(45) Veröffentlichungstag und Bekanntmachung des Hinweises auf die Patenterteilung: **08.12.2010**
(21) Anmeldenummer: 03010262.8
(22) Anmeldetag: 07.05.2003
(51) Int. Cl.: C09J 5/06, B60J 1/00, B65G 57/00

(54) **Stapelbares Modul**
Stackable module
Module empilable

(43) Veröffentlichungstag der Anmeldung: 10.11.2004
(73) Patentinhaber: Sika Technology AG, 6340 Baar (CH)
(72) Erfinder: Konstanzer, Martin, 8048 Zürich (CH); Blank, Norman, 8803 Rüschlikon (CH)
(74) Vertreter: Isler, Jörg

(56) Entgegenhaltungen:
- EP-A- 0 197 845
- EP-A- 0 995 993
- WO-A-00/43285
- WO-A-94/18255
- FR-A- 2 812 652
- US-A- 4 551 372
- US-A- 5 115 913
- US-A- 5 244 557
- US-A- 6 054 001
- DATABASE WPI Section Ch, Week 198722 Derwent Publications Ltd., London, GB; Class A89, AN 1987-152586 XP002254001 & JP 62 088154 A (DAICEL CHEM IND LTD), 22. April 1987 (1987-04-22)
- "MODULAR GLAZING" AUTOMOTIVE ENGINEERING, SOCIETY OF AUTOMOTIVE ENGINEERS. WARRENDALE, US, Bd. 100, Nr. 12, 1. Dezember 1992 (1992-12-01), Seiten 15-17, XP000330222 ISSN: 0098-2571

## Beschreibung

### Technisches Gebiet

Die Erfindung geht aus von einem Verfahren zum Verkleben von Modulen.

### Stand der Technik

In der industriellen Fertigung von Konsumgütern werden diese üblicherweise an einer Fertigungslinie zusammengesetzt. Es sind in der Verbundtechnologie zwei Trends zu beobachten. Einerseits werden aufgrund der damit verbundenen Vorteile immer mehr Verklebungen, insbesondere elastische Verklebungen, als Verbindungstechnik eingesetzt. Andererseits wird vermehrt die Modulbauweise eingesetzt. Hierbei werden nicht mehr alle Einzelteile an der Fertigungslinie zu einem industriell gefertigten Endprodukt zusammengesetzt, sondern Module verwendet, die zwar ihrerseits aus Einzelteilen zusammengesetzt sind, aber abseits von der Fertigungslinie, typischerweise bei einem Zulieferanten, gefertigt werden.

Hierbei tritt jedoch das grosse Problem auf, dass einerseits die Module in grosser Anzahl vom Modulhersteller zum Standort der Fertigungslinie transportiert werden müssen, und andererseits zur Vermeidung von Unterbrüchen an der Fertigungslinie vielfach eine genügend grosse Anzahl Module in einem Lager zwischengelagert werden müssen. Aus Kostengründen müssen sowohl beim Transport als auch der Lagerung die Module in einer möglichst platzsparenden Art und Weise angeordnet werden, die eine leichte und schnelle Verschiebung ermöglicht. Deshalb werden Module möglichst eng aufeinandergestapelt. Dies erfolgt typischerweise auf Paletten.

Bei einer solchen Stapelung tritt allerdings das Problem auf, dass sowohl bei der Errichtung eines Modulstapels und insbesondere während eines Transportes eines solchen Modulstapels sich die einzelnen Module leicht verschieben, was dazu führt, dass die Oberflächen zweier direkt aufeinanderliegenden Module sich aufeinander reiben können, was zu Kratzern oder anderen ästhetisch und technisch nachteiligen Effekten oder gar zu Absplitterungen oder anderen irreversiblen Beschädigungen führen kann.

Um diese Nachteile zu verhindern, werden entweder speziell delikate Module einzeln in Karton oder Polymerfolien eingepackt oder durch spezielle Kartoneinsätze, ähnlich, wie sie z.B. auch in Weinkartons üblich sind, geschützt. Weiterhin als Abstandhalter zum Einsatz kommen geschäumte Polymere. Diese Abstandhalter werden lose zwischen die Module gelegt um einen direkten Kontakt zu verhindern. Die Verwendung von losen Abstandhaltern weist jedoch einige Probleme bei der Stapelung und beim Transport auf, insbesondere dass sie leicht verrutschen können. Deshalb werden beispielsweise beim Transport von Autoscheiben Abstandhalter verwendet, die beispielsweise aus Korkbändern bestehen, die auf einer Seite ein Klebeband oder Sprühklebstoff aufweisen, so dass eine Fixierung auf der Oberfläche ermöglicht wird, und die Abstandhalter trotzdem wieder leicht entfernt werden können. Die Entfernung der Transport-Abstandhalter ist jedoch mit einigem Aufwand und mit dem Risiko verbunden, dass durch die Klebstoffrückstände die Oberfläche verschmutzt wird, so dass Schlieren im sichtbaren Bereich oder Haftstörungen im Klebebereich der Oberflächen entstehen können.

Hotmeltklebstoffe sind seit langem bekannt und werden beispielsweise in der Verpackungs-, Textil und Schuhindustrie breit angewendet. Bei einem Hotmelt gehen jedoch wie bei allen schnell aushärtenden Klebstoffen, wie beispielsweise 2-Komponeneten-Polyurethanklebstoffe, ein schneller Festigkeitsaufbau mit einer kurzen Offenzeit einher. Die Verklebung muss nämlich innerhalb der sogenannten Offenzeit erfolgen, was bedingt, dass dem Anwender nur eine sehr kurze Zeit verbleibt, um den Klebstoff aufzutragen, die Verbundpartner zu positionieren und zu fügen. Beim Überschreiten der Topfzeit, ist aufgrund der mangelhaften Benetzung und/oder Abwesenheit von reaktiven Gruppen keine Haftung mehr möglich.

Dies ist besonders bei grossflächigen Verklebungen sehr nachteilig. Zudem ist dies insbesondere bei metallischen Untergründen oder anderen Untergründen mit guter Wärmeleitfähigkeit ebenso unvorteilhaft.

Deshalb finden Hotmelts beispielsweise als Scheibenklebstoffe im Automobilbau keine Anwendung. Ein weiterer grosser Nachteil von Hotmelts ist, dass eine erfolgte Verklebung infolge des thermoplastischen Verhaltens des Klebstoffes Tendenz zum Kriechen hat und die Festigkeit der Verklebung speziell bei hohen Temperaturen stark nachlässt. Aus diesem Grund sind Verklebungen mit starker dynamischer und insbesondere statischer Belastung ungeeignet, um mit Hotmeltklebstoffen realisiert zu werden.

Aus diesem Grunde werden in der industriellen Fabrikation, insbesondere beim Fahrzeugbau, elastische einkomponentige Polyurethanklebstoffe eingesetzt. Diese Klebstoffe weisen jedoch den grossen Nachteil auf, dass sie langsam aushärten. Bis der Klebstoff eine genügend grosse Eigenfestigkeit erzielt, um die Verbundpartner auch unter Druck und Krafteinwirkung in der gewünschten Position zu halten, werden die Verbundpartner üblicherweise relativ zu einander fixiert. Für solche Fixierungen werden häufig Keile oder Klebebänder verwendet, die nach der Aushärtung wieder entfernt werden. Die Verwendung von derartigen Fixierungshilfen bedeutet sowohl einen zusätzlichen Arbeitsaufwand als auch eine Gefahr für die Verletzung von sichtbaren Oberflächen.

Die US 4,551,372 zeigt eine Doppelverbundscheibe welche an ihrem Rand eine weitere Verklebung aufweist welche als Abstandhalter (spacer) verwendet werden kann.

### Darstellung der Erfindung

Aufgabe der vorliegenden Erfindung ist es, Module zur Verfügung zu stellen, welche einerseits ohne Beschädigung gestapelt, gelagert oder transportiert werden können und andererseits einfach verklebt werden können, insbesondere in Kombination mit einkomponentigen Polyurethanklebstoffen, ohne zusätzliche Fixierungshilfen verwenden zu müssen.

Es hat sich überraschenderweise gezeigt, dass dies durch das erfindungsgemässe stapelbare Verfahren gemäss Anspruch 1 erreicht werden kann. Dabei wird mindestens ein Abstandhalter, auf einem Hotmelt-Klebstoffbindemittel basierend, auf der Oberfläche des Moduls angebracht ist und auf dieser haftet.

Die Vorteile der Erfindung sind unter anderem darin zu sehen, dass die Module mit einfachen Mitteln und mit wenig Aufwand hergestellt werden können, sowie eine sichere Stapelung, sicheren Transport und Lagerung, und eine einfache Entnahme der Module aus dem Stapel erlauben.

Die Module können des weiteren einfach verklebt werden, ohne, dass die Abstandhalter entfernt werden müssen.

Weitere vorteilhafte Ausgestaltungen der Erfindung ergeben sich aus den Unteransprüchen.

### Kurze Beschreibung der Zeichnungen

Im folgenden werden anhand der Zeichnungen Ausführungsbeispiele der Erfindung näher erläutert. Gleiche Elemente sind in den verschiedenen Figuren mit den gleichen Bezugszeichen versehen.

Es zeigen:
- Fig. 1: eine Draufsicht auf ein Modul mit Abstandhalter und Klebstoff;
- Fig. 2: eine Seitenansicht einer zu verklebenden Zugscherprobe;
- Fig. 3: eine Seitenansicht der verklebten Zugscherprobe aus Fig. 2.

Es sind nur die für das unmittelbare Verständnis der Erfindung wesentlichen Elemente gezeigt.

### Wege zur Ausführung der Erfindung

Die vorliegende Erfindung betrifft ein Verfahren zum Verkleben von stapelbaren Modulen, die mindestens einen Abstandhalter aufweisen, welcher auf einem Hotmelt-Klebstoffbindemittel basiert, und auf einer Oberfläche des Moduls angebracht ist und auf dieser haftet.

Die beschriebenen Module können praktisch überall eingesetzt werden. Bevorzugte Einsatzgebiete sind Maschinenbau, Computerbau, Gebrauchsgüterbau, insbesondere Haushaltsmaschinen, wie beispielsweise Waschmaschinen, Herde oder Kaffeemaschinen, Geschirrspülmaschinen, Fahrzeugbau, insbesondere Bus-, Automobil- Nutzfahrzeug- und Bus- oder Zugbau.

Module können diverse Baugruppen sein, die ihrerseits aus mehreren Teilen zusammengesetzt sind. Die Komplexität solcher Module ist sehr unterschiedlich, es können beispielsweise zwei miteinander fixierte Teilschalen sein oder aber es können Module mit Tausenden von Teilen sein. Beispiele für solche Module sind Reserveradmulden, Scheinwerfergehäuse, Rückspiegel, Führerkabinen, Steuerungseinheiten, Türen, Leiterplatinen, Dachmodule, usw.. Besonders bevorzugt sind als Module Scheiben jeglicher Art, insbesondere Dachmodule, Windschutzscheiben-, Heckscheiben-, Seitenscheiben-Module.

Der Abstandhalter hat die primäre Funktion, durch seine räumliche Ausdehnung die direkte Berührung von zwei Flächen von mindestens zwei aufeinander gestapelten oder sich seitlich berührenden Moduloberflächen zu verhindern. Solche Abstandhalter werden sinnvollerweise nur dort angebracht, wo mit einem Kontakt der Modulflächen zu rechnen ist. Der Ort, die Anzahl und genaue Geometrie dieser Abstandhalter ist abhängig von der Modulgeometrie und dem Fachmann ist klar, wie diese zu konzipieren sind, so dass die Funktion des Abstandhalters gewährleistet ist. In einer bevorzugten Ausführungsform ist die Dicke des Abstandhalters gleich gross oder geringfügig grösser als die geplante Klebstoffdicke zwischen dem Modul und einer zusätzlich zu verklebende Oberfläche.

Der Abstandhalter basiert auf einem Hotmelt-Klebstoffbindemittel. Das Hotmelt-Klebstoffbindemittel ist vorzugsweise lösungsmittelfrei und liegt bei Raumtemperatur in einem festen Aggregatszustand vor. Zur Verarbeitung muss das Bindemittel aufgewärmt und in einen flüssigen Zustand überführt werden. Die Schmelztemperatur des Hotmelt-Klebstoffbindemittels als Bestandteil des Abstandhalters ist hierbei von grosser Wichtigkeit. Je nach Material des Moduls kann dieser stark variieren. Einerseits ist darauf zu achten, dass der Schmelzpunkt oder Schmelzbereich nicht zu tief liegt. Der Abstandhalter darf sich sinnvollerweise nicht bereits bei der Lager- oder Transporttemperatur plastisch verformen oder gar schmelzen, denn dadurch würde die Schutzfunktion des Abstandhalters stark beeinträchtigt und würde gegebenenfalls höchstens noch als Schutzfolie zu gebrauchen sein.

Auf der anderen Seite sollte die Schmelztemperatur nicht allzu hoch sein. Einerseits sollten die Materialien durch die eingebrachte Temperatur nicht allzu stark geschädigt werden. Zu hohe Temperaturen können infolge von Wärmeausdehnungen zu Verformungen führen, besonderes ausgeprägt ist dies bei Verklebungen, bei denen die Materialien der verklebten Stoffe stark unterschiedliche Ausdehnungskoeffizienten aufweisen, wie beispielsweise in der Kombination Metall/Kunststoff. Wärmeempfindliche Materialien begrenzen ebenfalls die mögliche Schmelztemperatur der eingesetzten Hotmelt-Klebstoffbindemittel. Besonders bei der Anwendung von Kunststoffen ist die verwendbare Temperatur nach oben begrenzt. So ist es beispielsweise vorteilhaft, darauf zu achten, dass die Schmelztemperatur des Abstandhalters unter der Erweichungstemperatur des Kunststoffes liegt.

Die Schmelztemperatur des Hotmelt-Klebstoffbindemittels beträgt vorzugsweise zwischen 50°C und 140°C, insbesondere zwischen 55°C und 120°C.

Das Hotmelt-Klebstoffbindemittel des Abstandhalters ist so auszuwählen, dass es auf der Oberfläche des Moduls und gegebenenfalls auf einer damit zu verklebenden Fläche, eine zumindest temporäre Haftung aufweist. Die Haftung der Abstandhalter auf dem Substrat ist mindestens so gross, dass diese durch ihr Eigengewicht und durch andere Kräfte, wie sie bei der Stapelung und beim Transport der Module entstehen, nicht abfallen.

Chemisch gesehen, kommen grundsätzliche alle aus der Hotmelt-Klebstofftechnologie bekannten Materialien in Frage. Besonders geeignet sind beispielsweise Ethylen-Vinylacetat-Copolymere, Polyolefine, insbesondere APAOs (Amorphe- Poly-Alpha-Olefine), Ethylen-Ethylacrylat-Copolymere, Polyamide, Polyester, insbesondere Polycaprolactonpolyester, Polyurethan, insbesondere TPUs (Thermoplastische Polyurethane) und Polycaprolacton Polyurethane sowie Butadien-Styrol-Blockcopolymere. Es können auch Mischungen dieser Polymere eingesetzt werden, wobei dies Mischungen innerhalb der gleichen Klasse oder unter den Klassen sein können.

Der Abstandhalter muss auf einer Moduloberfläche angebracht werden und auf dieser haften. Die Moduloberfläche kann aus unterschiedlichem Material sein. Besonderes bevorzugt sind als Material Metalle und Kunststoffe. Das Modul ist üblicherweise aus unterschiedlichen Materialien aufgebaut Besonders häufig ist die Oberfläche des Moduls veredelt. Eine solche Veredelung kann beispielsweise ein Lack, eine Beschichtung oder eine Oberflächenbehandlung darstellen. Beispiele für derartige Veredelungsmethoden sind Keramikbeschichtungen, Pulverlackierungen, Eloxierung, Zinkstaubgrundierung, Phosphatierung, Chromatierungen, Sol/Gel-Beschichtungen, usw..

Die Moduloberfläche kann bei Bedarf für eine Verklebung vorbehandelt werden. Solche Vorbehandlungen umfassen sowohl chemische als auch physikalische Vorbehandlungen wie Schleifen, Sandstrahlen, Bürsten oder dergleichen, oder Behandeln mit Reinigern, Lösungsmitteln, Haftvermittlern, Haftvermittlerlösungen oder Primern.

Der Abstandhalter besteht aus einem Hotmelt-Klebstoffbindemittel oder enthält ein Hotmelt-Klebstoffbindemittel. Es ist jedoch vorteilhaft, wenn der Anteil des Hotmelt-Klebstoffbindemittels einen wesentlichen Gewichtsanteil, vorzugsweise mehr als 70 Gewichts-%, insbesondere mehr als 90 Gewichts-%, bezogen auf das Gewicht des Abstandhalters darstellt. Weitere Bestandteile können beispielsweise Additive, Tackifier, Haftvermittler, Füllstoffe, UV-Schutzmittel, Wärmeschutzmittel, Biocide, Fungicide, Pigmente, usw. sein.

Der Abstandhalter ist bevorzugt mindestens an der Oberfläche geringfügig elastisch und weist keine scharfen Kanten auf.

In einer bevorzugten Ausführungsform sind mikrowellen-absorbierende Materialien Bestandteile des Abstandhalters. Bevorzugt sind hierbei einerseits mikrowellen-absorbierende Füllstoffe und mikrowellen-absorbierende Pigmente, wie beispielsweise Ferrite, Ceroxide, Germaniumoxide, Russ, usw. Besonders bevorzugt sind sogenannte Nanopartikel und / oder Russ. Die mittlere Partikelgrösse dieser mikrowellen-absorbierende Füllstoffe und mikrowellen-absorbierende Pigmente liegt vorzugsweise unter einem Mikrometer, insbesondere unter 100 Nanometer.

Die Geometrie des Abstandhalter ist bei flächiger Ausführung vorteilhaft im Querschnitt ein Rechteck, ein Dreieck oder ein Trapez. Der Abstandhalter kann auch eine Porenstruktur aufweisen.

Die Anbringung des Abstandhalters auf das Modul kann auf unterschiedliche Art erfolgen. Beispielsweise kann einerseits ein Abstandhalter durch einen Extrusionsprozess oder Giessprozess geformt werden. Ein solcher Abstandhalter kann bei der Verarbeitung durch eine Wärmequelle in dem Bereich, welcher eine Klebverbindung mit der Moduloberfläche eingehen soll, derart aufgewärmt werden, dass zumindest die Oberfläche an- oder aufgeschmolzen wird, und anschliessend auf die Moduloberfläche aufgesetzt werden. Durch die angeschmolzene Abstandhalteroberfläche tritt eine Benetzung der Moduloberfläche auf, was beim Abkühlen des Abstandhalters zum Aufbau der Haftung führt. Alternativ kann auch die Moduloberfläche zumindest lokal im Bereich der geplanten Verklebung auf eine Temperatur, welche bei oder über dem Schmelzpunkt des Abstandhalters liegt, aufgewärmt werden. Anschliessend wird ein Abstandhalter auf die warme Oberfläche gesetzt. Durch den Kontakt mit der warmen Oberfläche schmilzt der Abstandhalter im Bereich der Kontaktfläche an oder auf.

Andererseits kann beispielsweise der Abstandhalter auch direkt als Schmelze auf die Moduloberfläche aufgebracht werden, beispielsweise mit Hilfe einer Düse. Durch unterschiedliche Formen der Düsen lässt sich der Querschnitt des Abstandhalters bestimmen. Neben raupenförmigen Abstandhalter sind auch punktförmige Abstandhalter so realisierbar.

Die Erwärmung des Abstandhalters oder der Moduloberfläche kann beispielsweise mittels Infrarotstrahler, Zufuhr von Warmluft, kontaktieren mit elektrischen Wärmeelementen oder Lagerung im Ofen erfolgen. Bei geeigneten metallischen Moduloberflächen kann Induktionsheizung verwendet werden.

Bei jeglichen Aufheizprozessen ist jedoch darauf zu achten, dass das Schmelzen des Abstandhalters vorteilhaft nur auf den Bereich der mit der Modul zu kontaktierenden Oberfläche limitiert ist. Dies hat den Vorteil, dass der vom Abstandhalter bedingte Abstand zwischen zwei Modulen bei allen identischen Abstandhalter im wesentlichen gleich ist, und leicht durch die Dimension des eingesetzten Abstandhalterkörpers vorgegeben werden kann. Insbesondere wichtig ist dies, wenn in einer, wie weiter unten im Detail beschrieben Ausführungsform der Erfindung, dem Abstandhalter beim Verkleben des Moduls die Funktion eines Klebstoffabstandhalters zukommt.

Für die sichere Stapelung ist darauf zu achten, dass insbesondere die Geometrie, das Material, die Verformungseigenschaften bei statischen Belastungen, das Gewicht, die Anzahl, der Ort, die Geometrie und die mechanischen Eigenschaften berücksichtigt werden müssen, um einen Stapel zu erreichen, ohne dass Module abrutschen können, sowie wie viele Module aufeinander gestapelt werden können.

Nachdem die Abstandhalter angebracht sind, muss der Abstandhalter abkühlen, zumindest soviel, dass zumindest eine genügend grosse Anfangshaftung erfolgt, so dass die Abstandhalter bei Bewegungen des Moduls nicht durch ihr eigenes Gewicht wieder wegfallen.
Die Anbringung der Abstandhalter kann auf bereits gestapelte Module erfolgen, oder die Abstandhalter können bevorzugt auf die Module an einem separaten Arbeitsplatz angebracht werden und anschliessend die Module mit angebrachtem Abstandhalter aufeinander gestapelt werden. Die Orientierung der Module mit den angebrachten Abstandhalter im Stapel kann unterschiedlich erfolgen, so sind beispielsweise plattige Module mit Abstandhalter nach unten oder nach oben stapelbar. Es ist, wenn auch nicht bevorzugt, eine vertikale Orientierung dieser Module möglich. Die einzelnen Module oder der gesamte Modulstapel kann weiter verpackt sein oder durch andere Mittel zusätzlich in ihrer Lage fixiert werden. Unter gewissen Umständen ist es zu bevorzugen die einzelnen Module oder den gesamten Stapel mit Schutzfolien zu umhüllen.

Beim Verkleben wird der Klebstoff auf die Oberfläche eines Verbundpartner aufgetragen und mit der Oberfläche eines weiteren Verbundpartners kontaktiert. Bei diesem Kontaktieren muss gewährleistet werden, dass der Klebstoff auch wirklich mit dem zweiten Verbundpartner in Kontakt kommt. Dies wird einerseits durch eine auf die Werkstücke / Module sowie deren Masstoleranzen und andererseits durch ein Anpressen der Werkstücke aufeinander erreicht. Je nach Geometrie des Klebeverbundes kann auch das Eigengewicht der Verbundpartner ein solches Andrücken bewirken.

Um eine gute Benetzung der Verbundpartner zu gewährleisten, werden deshalb Klebstoffe generell als flüssige oder pastöse Massen aufgetragen. Die Fliesseigenschaften ermöglichen zwar eine Benetzung der Oberflächen, bedingen jedoch auch, dass der Klebstoff, speziell unter Druck, vom Ort der Applikation wegfliesst. Dies ist besonders störend, da durch ein solches Wegfliessen der Klebstoff allenfalls in den sichtbaren Bereich einer Verklebung gelangen kann und dadurch die Ästhetik beeinträchtigt. Weiterhin wird durch ein Wegfliessen des Klebstoffes die Schichtdicke der Klebverbindung geringer.

Um eine genaue Geometrie sowie eine verlässliche Verklebung zu gewährleisten, ist es deshalb sehr wichtig, dass nach dem Auftragen des Klebstoffes die Verbundstücke in der gewünschten Position gehalten werden, bis der Klebstoff genügende Festigkeit aufgebaut hat, um die Verbundstücke in Position zu halten.

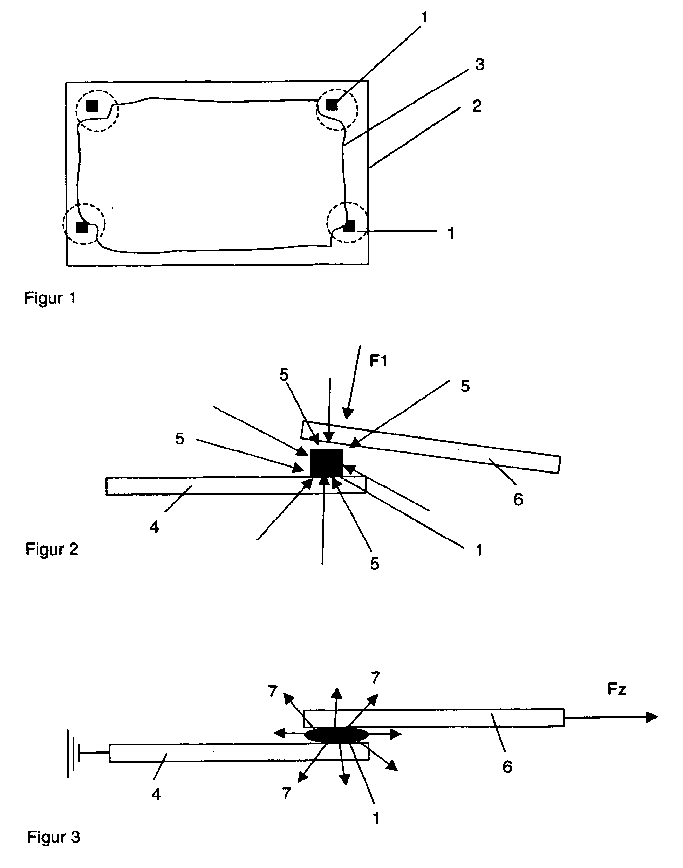

Nach Fig. 1 wird ein erfindungsgemässer Abstandhalter 1 an der Fertigungslinie nicht entfernt, sondern verbleibt an seiner Position auf einem Modul 2, hier einer Autoscheibe. Auf das Modul 2 wird dann Montageklebstoff 3, z.B. 1C-PUR Klebstoff, appliziert. Vorzugsweise wird die Montageklebstoff raupe 3 nicht durch die Hotmelt-Abstandhalter 1 unterbrochen, sondern schliesst diese mit ein bzw. verläuft innerhalb der Abstandhalter 1. Dadurch werden evtl. später auftretende Undichtigkeiten am Stoss des Montageklebstoffes und des Abstandhalters ausgeschlossen. Nachdem der Montageklebstoff aufgetragen ist, werden die Abstandhalter aus Hotmeltklebstoff aufgeschmolzen. Durch diesen Prozess werden die Abstandhalter zu einem Hotmelt-Fixierklebstoff. Dieser Prozess kann durch die verschiedensten Energiequellen geschehen, bevorzugt durch IR-Strahlung, Heissluftzufuhr oder besonders bevorzugt durch Mikrowellenstrahlung. Das Aufschmelzen der Hotmelt-Abstandhalter kann auch vor oder während dem Montageklebstoffauftrag geschehen. Das Modul mit Montageklebstoff und dem Abstandhalter mit aufgeschmolzenem Hotmelt-Fixierklebstoff wird dann manuell oder automatisiert, z.B. mit einem Roboter, in das zu produzierende Gut eingebaut / eingepresst. Der Hotmelt-Fixierklebstoff, wie auch der Montageklebstoff, benetzen die Klebefläche des Gegenstückes. Durch Abkühlen verfestigt sich der Hotmelt-Fixierklebstoff rasch und baut Haftung zum Substrat auf. Die Haftung ist dann mindestens so gross, dass das Modul in seiner Position fixiert ist, bis der eigentliche Montageklebstoff genügend Festigkeit aufgebaut hat und das Modul fest in seiner Position zu halten in der Lage ist. Fixierhilfen wie Klebebänder, Keile oder Zwingen sind bei diesem Montageverfahren nicht mehr nötig, was einen entscheidenden Vorteil bietet. Die Abstandhalter müssen also nach Ihrem Gebrauch nicht mehr entfernt und entsorgt werden sondern werden zu einem Fixierklebstoff umfunktioniert. Zusätzliche Fixierhilfen sind somit auch nicht mehr notwendig, was ein weiterer grosser Vorteil ist.

Es wurden Klebstoffproben aus Polycaprolactonpolyester und Ethylenvinylacetat EVA zur Verwendung als Abstandhalter geprüft. Zur Herstellung der Prüfkörper wurden Klebstoffproben bei 80°C geschmolzen und mit Hilfe einer Presse eine Platte von 3mm Dicke hergestellt. Aus der abgekühlten, verfestigten Masse wurden dann DIN Prüfkörper (S2 Stab) ausgestanzt und der Zugversuch nach DIN 53 504 bei einer Testgeschwindigkeit von 200 mm/min durchgeführt.

Zur Ermittlung des Schubmoduls nach VW Norm und der Zugscherfestigkeit ZSF wurden Aluminiumsubstrate mit SikaPrimer 204N vorbehandelt und dann mit einer festen Klebstoffprobe belegt. Im Ofen bei 80°C wurde der Klebstoff aufgeschmolzen und die Substrate aufgewärmt. Nach 20 min im Ofen wurden die Substrate verpresst und der überschüssige Klebstoff abgestreift. Die Messung der Proben erfolgte nach 24 h Lagerung bei Raumtemperatur. Die Klebedicke betrug 1.75mm, Breite 25mm, Überlappung 10 mm, die Testgeschwindigkeit 10 mm/min.

Da durch eine reine Abkühlung keine chemisch aufgebaute Haftung erreicht wird und weiterhin die geprüften Materialien nicht die von 1 K-PUR Klebstoffen gewohnte Dehnung aufweisen, konnte die Haftung nicht nach dem Peel-Test geprüft werden. Deshalb wurde die Aussage über Haftung auf den Substraten an der Schubmodul / Zugscherprobe getroffen. Beurteilt wurde ein adhäsiver / kohäsiver Bruch.

Die so gewonnenen Resultate sind in der Tabelle 1 dargestellt.

**Tabelle 1**

| | Polycaprolactonpolyester Pearlbond 503 | EVA |
|---|---|---|
| Zugfestigkeit [MPa] | 11 | 4.3 |
| E-Modul 0.5-5% [MPa] | 195 | 58 |
| E-Modul 0.5-25% [MPa] | 25 | 14 |
| Schubmodul [MPa] | 20 | 16 |
| Zugscherfestigkeit [MPa] | 6 | 2 |
| Haftung | 90-95% Primerbruch, d.h. Klebstoff haftet auf Primer | 100% adhäsiver Bruch, d.h. Klebstoff haftet nicht auf Primer |

Die Werte mit EVA als Abstandhalter sind zwar schlechter als diejenigen mit Polycaprolactonpolyester, könnten jedoch bei der Verwendung eines an EVA angepassten Primers verbessert werden.

Zur Verklebung in einem Mikrowellenfeld wurde ein mikrowellenaktiver Klebstoff verwendet. Der verwendete Klebstoff basiert auf einem Polycaprolacton-Polyurethan mit einem Schmelzbereich von 50°C bis 60°C, gefüllt mit Leitfähigkeitsruss mit einer Partikelgrösse von unter 100nm als mikrowellenaktiver Füllstoff.

Eine Klebstoffprobe von ca. 1 g wurde innerhalb max. 1 min auf 60-80°C erhitzt und geschmolzen. Eine vorbehandelte Kunststoffoberfläche, z.B. mittels Sikaprimer 209N, wurde mit der geschmolzenen Klebstoffprobe verklebt. Die Endfestigkeit wurde nach Abkühlen erreicht. Je nach Aussentemperatur und Wärmeabfuhr sowie Klebstoffmenge ist dies unterschiedlich. Bei 23°C sind dies jedoch ca. 2-5 min bei einer Probe von max. 1 g.

Nach Fig. 2 wurde ein Abstandhalter 1, ca. 1 Gramm aus dem mikrowellenaktiven Klebstoff, auf eine Platte 4 aus PMMA aufgelegt. Auf den Abstandhalter wurde dann eine Mikrowellenstrahlung 5 aufgebracht und der Abstandhalter aufgeschmolzen. Danach wurde eine weitere Platte 6 mit einer Verpresskraft F1 auf den Abstandhalter 1 aufgepresst.

Nach Fig. 3 wurde dann der Abstandhalter mittels Wärmeabfuhr 7 abgekühlt und die Zugscherfestigkeit ZFS mittels einer Zugscherkraft Fz ermittelt. Die so gewonnenen Resultate sind aus Tabelle 2 ersichtlich.

**Tabelle 2**

| Leistung Mikrowelle [W] | Heizzeit [s] | Abkühlzeit [s] | Fz [N] | Schichtdicke [mm] | A (Klebefläche) [mm²] | ZSF (Zugscherfestigkeit) [MPa] |
|---|---|---|---|---|---|---|
| 900 | 19 | 60 | 0 | ca.3 | 0 | 0 |
| 900 | 20 | 120 | 120 | ca.3 | 150 | 0.8 |
| 900 | 15 | 300 | >300^{*} | ca.3 | 360 | >0.8 |

| | | | | | | |
|---|---|---|---|---|---|---|
| *mehr als 300 N sind mit der vorhandenen Apparatur nicht mehr messbar | | | | | | |

Das oben genannte Beispiel zeigt, dass bei der verwendeten Messanordnung eine Abkühlzeit von 60s für den Festigkeitsaufbau nicht ausreichen. Ab ca. 120s wird jedoch eine Zugscherfestigkeit von 0.8 MPa und mehr erreicht.

## Patentansprüche

1. Verfahren zum Verkleben eines Moduls (2), umfassend:
a) anbringen mindestens eines Abstandhalters auf dem Modul, wobei der mindestens eine Abstandhalter auf einem Hotmelt-Klebstoffbindemittel basiert und auf einer Oberfläche des Moduls haftet;
b) Entnahme eines Moduls (2) aus einem Modulstapel;
c) Aufschmelzen (5) des Abstandhalters (1) oder Anschmelzen (5) der Abstandhalteroberfläche und Kontaktieren des Moduls (2) über den zumindest teilweise geschmolzenen Abstandhalter (1) mit einer weiteren zu verklebenden Oberfläche; oder
c') Kontaktieren des Moduls über den Abstandhalter (1) mit einer weiteren zu verklebenden Oberfläche und Aufschmelzen (5) des Abstandhalters oder Anschmelzen (5) des Abstandhalters (1) in der Kontaktfläche des Abstandhalters zur weiteren zu verklebende Oberfläche;
d) Abkühlen (7) des Abstandhalter (1) auf Raumtemperatur und Fixierung des Moduls auf der weiteren zu verklebenden Oberfläche;
e) Anbringung eines weiteren Klebstoffes (3) zwischen Modul und der weiteren zur verklebenden Oberfläche zu einem beliebigen Zeitpunkt nach dem Schritt b) Entnahme des Moduls (2) aus einem Modulstapel.

2. Verfahren gemäss Anspruch 1, **dadurch gekennzeichnet, dass** der Klebstoff (3) vor dem Kontaktieren von Modul (2) und weiterer zu verklebender Oberfläche in Form einer Klebstoffraupe, insbesondere in einem dem Abstandhalter (1) benachbarten Bereich, auf die Moduloberfläche oder auf die weitere zu verklebende Oberfläche aufgebracht wird.

3. Verfahren gemäss Anspruch 1, **dadurch gekennzeichnet, dass** der Klebstoff (3) nach dem Kontaktieren von Modul (2) und weiterer zu verklebender Oberfläche in einen Spalt zwischen Modul und zu verklebende Oberfläche eingebracht wird.

4. Verfahren nach einem der Ansprüche 1 bis 3, **dadurch gekennzeichnet, dass** der Klebstoff (3) ein einkomponentiger Polyurethanklebstoff ist.

5. Verfahren nach einem der vorhergehenden Ansprüche, **dadurch gekennzeichnet, dass** das Erwärmen, Aufschmelzen oder Anschmelzen (5) des Abstandhalters (1) durch Mikrowellenstrahlung erfolgt.

6. Verfahren nach einem der vorhergehenden Ansprüche, **dadurch gekennzeichnet, dass** das Hotmelt-Klebstoffbindemittel des Abstandhalters (1) ein Ethylen-Vinylacetat-Copolymer, Polyolefin, insbesondere ein APAO, Ethylen-Ethylacrylat-Copolymer, Polyamid, Polyester, insbesondere Polycaprolactonpolyester, Polyurethan, insbesondere TPUs oder Polycaprolacton-Polyurethan, Butadien-Styrol-Blockcopolymer oder eine Mischung davon enthält oder daraus besteht.

7. Verfahren nach einem der vorhergehenden Ansprüche, **dadurch gekennzeichnet, dass** das Hotmelt-Klebstoffbindemittel einen Polyester, insbesondere einen Polycaprolactonpolyester, enthält oder daraus besteht.

8. Verfahren nach einem der vorhergehenden Ansprüche, **dadurch gekennzeichnet, dass** das Hotmelt-Klebstoffbindemittel ein Polyurethan, insbesondere ein thermoplastisches Polyurethan oder Polycaprolacton-Polyurethan, enthält oder daraus besteht.

9. Verfahren nach einem der vorhergehenden Ansprüche, **dadurch gekennzeichnet, dass** das Hotmelt-Klebstoffbindemittel einen Schmelzpunkt zwischen 50°C und 140°C, insbesondere zwischen 55°C und 120°C, aufweist.

10. Verfahren nach einem der vorhergehenden Ansprüche, **dadurch gekennzeichnet, dass** der Abstandhalter (1) mindestens einen mikrowellen-absorbierenden Stoff enthält.

11. Verfahren nach Anspruch 10, **dadurch gekennzeichnet, dass** der mikrowellen-absorbierenden Stoff ein Füllstoff und / oder ein Pigment und / oder ein Bindemittel, insbesondere Russ, ist.

12. Verfahren nach Anspruch 10 oder 11, **dadurch gekennzeichnet, dass** der mikrowellen-absorbierende Füllstoff oder das mikrowellen-absorbierende Pigment eine mittlere Partikelgrösse von kleiner als ein µm aufweist.

13. Verfahren nach einem der vorhergehenden Ansprüche, **dadurch gekennzeichnet, dass** das Anbringen des mindestens eines Abstandhalters auf dem Modul folgende Schritte umfasst:
Erwärmen (5) des Abstandhalters (1) oder der Moduloberfläche zumindest im Bereich der geplanten Anbringung des Abstandhalters (1) auf eine Temperatur, die über dem Schmelzpunkt des Hotmelt-Klebstoffbindemittel liegt;
Kontaktieren von Moduloberfläche (1) und Abstandhalter (2);
Abkühlen (7) des Abstandhalters (1) auf Raumtemperatur.

14. Verfahren nach einem der vorhergehenden Ansprüche, **dadurch gekennzeichnet, dass** der weitere Klebstoff nicht durch die Abstandhalter unterbrochen wird und diese einschliesst oder innerhalb der Abstandhalter verläuft.

## Claims

1. Method for adhesively bonding a module (2), comprising:
a) placing at least one spacer on the module, the at least one spacer being based on a hotmelt adhesive binder and adhering to a surface of the module;
b) taking a module (2) from a module stack;
c) melting (5) the spacer (1) or partially melting (5) the spacer surface, and contacting the module (2) via the at least partly melted spacer (1) with a further surface to be bonded; or
c') contacting the module via the spacer (1) with a further surface to be bonded, and melting (5) the spacer or partially melting (5) the spacer (1) in the area of contact of the spacer with the further surface to be bonded;
d) cooling (7) the spacer (1) to room temperature and fixing the module on the further surface to be bonded;
e) placing a further adhesive (3) between module and the further surface to be bonded, at any desired point in time after the step b) of taking the module (2) from a module stack.

2. Method according to Claim 1, **characterized in that** the adhesive (3), before the contacting of module (2) and further surface to be bonded, is applied in the form of a bead of adhesive, in particular in an area adjacent to the spacer (1), to the module surface or to the further surface to be bonded.

3. Method according to Claim 1, **characterized in that** the adhesive (3), after the contacting of module (2) and further surface to be bonded, is introduced into a gap between module and surface to be bonded.

4. Method according to any of Claims 1 to 3, **characterized in that** the adhesive (3) is a one-pack polyurethane adhesive.

5. Method according to any of the preceding claims, **characterized in that** the heating, melting or partial melting (5) of the spacer (1) takes place by microwave radiation.

6. Method according to any of the preceding claims, **characterized in that** the hotmelt adhesive binder of the spacer (1) consists of or comprises an ethylene-vinyl acetate copolymer, polyolefin, in particular an APAO, ethylene-ethyl acrylate copolymer, polyamide, polyester, in particular polycaprolactone polyester, polyurethane, in particular TPUs or polycaprolactone-polyurethane, butadiene-styrene block copolymer or a mixture thereof.

7. Method according to any of the preceding claims, **characterized in that** the hotmelt adhesive binder consists of or comprises a polyester, in particular a polycaprolactone polyester.

8. Method according to any of the preceding claims, **characterized in that** the hotmelt adhesive binder consists of or comprises a polyurethane, in particular a thermoplastic polyurethane or polycaprolactone-polyurethane.

9. Method according to any of the preceding claims, **characterized in that** the hotmelt adhesive binder has a melting point of between 50°C and 140°C, in particular between 55°C and 120°C.

10. Method according to any of the preceding claims, **characterized in that** the spacer (1) comprises at least one microwave-absorbing substance.

11. Method according to Claim 10 **characterized in that** the microwave-absorbing substance is a filler and/or a pigment and/or a binder, in particular carbon black.

12. Method according to Claim 10 or 11, **characterized in that** the microwave-absorbing filler or the microwave-absorbing pigment has an average particle size of smaller than one µm.

13. Method according to any of the preceding claims, **characterized in that** the placing of the at least one spacer on the module comprises the following steps:
heating (5) of the spacer (1) or of the module surface, at least in the area of the planned placement of the spacer (1), to a temperature which lies above the melting point of the hotmelt adhesive binder;
contacting of module surface (2) and spacer (1);
cooling (7) of the spacer (1) to room temperature.

14. Method according to any one of the preceding claims, **characterized in that** the further adhesive is not interrupted by the spacers, and encloses them or extends within the spacers.

## Revendications

1. Procédé pour le collage d'un module (2), comprenant :
a) l'application d'au moins un écarteur sur le module, où ledit au moins un écarteur est à base d'un liant adhésif thermofusible et adhère à une surface du module ;
b) le prélèvement d'un module (2) d'une pile de modules ;
c) la fusion (5) de l'écarteur (1) ou la fusion partielle (5) de la surface de l'écarteur et la mise en contact du module (2) via l'écarteur (1) au moins partiellement fondu avec une autre surface à coller ; ou
c') la mise en contact du module via l'écarteur (1) avec une autre surface à coller et la fusion (5) de l'écarteur ou la fusion partielle (5) de l'écarteur (1) dans la zone de contact de l'écarteur avec l'autre surface à coller ;
d) le refroidissement (7) de l'écarteur (1) à température ambiante et la fixation du module sur l'autre surface à coller ;
e) l'application d'un autre adhésif (3) entre le module et l'autre surface à coller à un moment quelconque après l'étape b) de prélèvement du module (2) de la pile de modules.

2. Procédé selon la revendication 1, **caractérisé en ce que** l'adhésif (3) est appliqué avant la mise en contact du module (2) et de l'autre surface à coller sous forme d'un cordon d'adhésif, en particulier dans une zone proche de l'écarteur (1), sur la surface du module ou sur l'autre surface à coller.

3. Procédé selon la revendication 1, **caractérisé en ce que** l'adhésif (3) est introduit après la mise en contact du module (2) et de l'autre surface à coller dans une fente entre le module et la surface à coller.

4. Procédé selon l'une quelconque des revendications 1 à 3, **caractérisé en ce que** l'adhésif (3) est un adhésif à base de polyuréthane à un composant.

5. Procédé selon l'une quelconque des revendications précédentes, **caractérisé en ce que** le chauffage, la fusion ou la fusion partielle (5) de l'écarteur (1) est réalisé(e) par un rayonnement de micro-ondes.

6. Procédé selon l'une quelconque des revendications précédentes, **caractérisé en ce que** le liant adhésif thermofusible de l'écarteur (1) contient ou est constitué par un copolymère d'éthylène-acétate de vinyle, une polyoléfine, en particulier une APAO, un copolymère d'éthylène-acrylate d'éthyle, un polyamide, un polyester, en particulier un polycaprolactone-polyester, un polyuréthane, en particulier du TPU ou un polycaprolactone-polyuréthane, un copolymère à blocs de butadiène-styrène ou un mélange de ceux-ci.

7. Procédé selon l'une quelconque des revendications précédentes, **caractérisé en ce que** le liant adhésif thermofusible contient ou est constitué par un polyester, en particulier un polycaprolactone-polyester.

8. Procédé selon l'une quelconque des revendications précédentes, **caractérisé en ce que** le liant adhésif thermofusible contient ou est constitué par un polyuréthane, en particulier un polyuréthane thermoplastique ou un polycaprolactone-polyuréthane thermoplastique.

9. Procédé selon l'une quelconque des revendications précédentes, **caractérisé en ce que** le liant adhésif thermofusible présente un point de fusion entre 50°C et 140°C, en particulier entre 55°C et 120°C.

10. Procédé selon l'une quelconque des revendications précédentes, **caractérisé en ce que** l'écarteur (1) contient au moins une substance absorbant les micro-ondes.

11. Procédé selon la revendication 10, **caractérisé en ce que** la substance absorbant les micro-ondes est une charge et/ou un pigment et/ou un liant, en particulier de la suie.

12. Procédé selon la revendication 10 ou 11, **caractérisé en ce que** la charge absorbant les micro-ondes ou le pigment absorbant les micro-ondes présente une grosseur moyenne des particules inférieure à un µm.

13. Procédé selon l'une quelconque des revendications précédentes, **caractérisé en ce que** l'application dudit au moins un écarteur sur le module comprend les étapes suivantes :
le chauffage (5) de l'écarteur (1) ou de la surface du module, au moins dans la zone de l'application prévue de l'écarteur (1) à une température qui est supérieure au point de fusion du liant adhésif thermofusible ;
la mise en contact de la surface du module (2) et de l'écarteur (1) ;
refroidissement (7) de l'écarteur (1) à température ambiante.

14. Procédé selon l'une quelconque des revendications précédentes, **caractérisé en ce que** l'autre adhésif n'est pas interrompu par l'écarteur et l'enrobe ou s'étend dans l'écarteur.
